# EUROPÄISCHE PATENTSCHRIFT

(11) **EP 3 102 854 B1**
(45) Veröffentlichungstag und Bekanntmachung des Hinweises auf die Patenterteilung: **30.12.2020**
(21) Anmeldenummer: 15700502.6
(22) Anmeldetag: 20.01.2015
(51) Int. Cl.: F16H 61/688

(54) **VERFAHREN ZUR SCHALTUNG EINES DOPPELKUPPLUNGSGETRIEBES**
METHOD FOR SHIFTING A DUAL CLUTCH TRANSMISSION
PROCÉDÉ POUR LE CHANGEMENT DES VITESSES SUR UNE BOÎTE DE VITESSES À DOUBLE EMBRAYAGE

(30) Priorität: 06.02.2014 DE 102014202148
(43) Veröffentlichungstag der Anmeldung: 14.12.2016
(73) Patentinhaber: Volkswagen Aktiengesellschaft, 38440 Wolfsburg (DE)
(72) Erfinder: BOTHE, Edgar, 31224 Peine (DE)
(86) Internationale Anmeldenummer: PCT/EP2015/051006
(87) Internationale Veröffentlichungsnummer: WO 2015/117816

(56) Entgegenhaltungen:
- EP-A2- 2 023 021
- DE-A1- 10 046 598
- DE-A1-102004 043 345
- DE-A1-102006 057 728
- US-A1- 2003 100 984

## Beschreibung

Die Erfindung betrifft ein Verfahren zur Schaltung eines Doppelkupplungsgetriebes mit den Merkmalen des Oberbegriffes des Patentanspruches 1.

Aus der I gattungsgemässen DE 103 49 220 A1 ist ein Verfahren zur Schaltung eines Doppelkupplungsgetriebes bekannt. Das Doppelkupplungsgetriebe weist zwei Teilgetriebe mit jeweils einer Reibkupplung und mit jeweils einer Getriebeeingangswelle auf. Den beiden Teilgetrieben sind mehrere Gangstufen zugeordnet. Dem einen ersten Teilgetriebe sind dabei die ungeraden Gangstufen 1, 3 und 5 und dem anderen zweiten Teilgetriebe sind die geraden Gangstufen 2, 4 und 6 zugeordnet. Es kann nun eine indirekte Schaltung von einem Quellgang in einen Zielgang durchgeführt werden. Bei einer indirekten Schaltung sind sowohl der Quellgang als auch der Zielgang dem gleichen Teilgetriebe zugeordnet. In dem zweiten Teilgetriebe mit den geraden Gangstufen ist nun beispielsweise als Quellgang die sechste Gangstufe eingelegt. Wenn nun in dem anderen ersten Teilgetriebe die fünfte Gangstufe vorgewählt ist, so ist die Drehzahl der dem ersten Teilgetriebe zugeordneten, ersten Getriebeeingangswelle leicht erhöht. Fordert nun die Fahrstrategie eine Rückschaltung von der sechsten in die zweite Gangstufe, also eine indirekte Schaltung an, wird zunächst die zweite Reibkupplung teilweise geöffnet, so dass der Schlupf an der zweiten Reibkupplung erhöht wird. Die Motordrehzahl löst sich daher von der Drehzahl der zweiten Getriebeeingangswelle, die über die eingelegte sechste Gangstufe mit einem Abtrieb beziehungsweise mit einer Abtriebswelle verbunden ist. Die Drehzahl der Abtriebswelle hängt dabei von der Fahrzeuggeschwindigkeit ab. Das Einlegen der fünften Gangstufe dient zur Vermeidung einer Zugkraftunterbrechung. Hierbei wird nun die fünfte Gangstufe als Hilfsgang zwischen dem Quellgang und dem Zielgang verwendet. Durch das Einlegen des Hilfsganges wird die Motordrehzahl mit nahezu konstanten Gradienten und weiter in Richtung Synchrondrehzahl des zweiten Ganges erhöht. Anschließend wird die sechste Gangstufe aus- und die zweite Gangstufe eingelegt, wodurch die Drehzahl der zweiten Getriebeeingangswelle des zweiten Teilgetriebes ansteigt. Erreicht die Motordrehzahl die Synchrondrehzahl des zweiten Teilgetriebes, also der zweiten Getriebeeingangswelle übernimmt die zweite Reibkupplung wieder; die erste Reibkupplung wird geöffnet, die zweite Reibkupplung geschlossen und die Mehrfachrückschaltung ist beendet. Die Motordrehzahl ist dabei kontinuierlich von der Synchrondrehzahl der sechsten Gangstufe auf die Synchrondrehzahl der zweiten Gangstufe hochgelaufen.

Aus der EP 1 450 075 B1 ist ein Verfahren zur Schaltung eines Doppelkupplungsgetriebes bekannt. Das Doppelkupplungsgetriebe weist zwei Teilgetriebe mit jeweils einer Reibkupplung und mit einer Getriebeeingangswelle auf. Während der Durchführung des Schaltvorganges von dem Quellgang in den Zielgang wird ein Zwischengang bei einer indirekten Schaltung angetrieben. Wenn nun dem ersten Teilgetriebe bei einer Rückschaltung sowohl der Quellgang als auch der Zielgang zugeordnet ist, so wird zunächst die erste Reibkupplung schlupfend betrieben, um die Drehzahl des Antriebsmotors zu erhöhen. In dem zweiten Teilgetriebe ist der Hilfsgang beziehungsweise die nächst niedrigere Gangstufe eingelegt. Wenn nun die Drehzahl des Antriebsmotors die Synchrondrehzahl des Hilfsganges erreicht, so wird überschneidend die zweite Kupplung geschlossen und die erste Kupplung geöffnet. Bei Erreichen der Synchrondrehzahl des Zielganges wird wiederum überschneidend die erste Reibkupplung geschlossen und die zweite Reibkupplung geöffnet und der Zielgang wird eingelegt.

Aus der DE 101 56 940 A1 ist ein Verfahren zum Anfahren eines Kraftfahrzeuges bekannt. Das Kraftfahrzeug weist einen Antriebsstrang mit einem Doppelkupplungsgetriebe auf. Das Doppelkupplungsgetriebe weist zwei Teilgetriebe auf, wobei jedem Teilgetriebe eine Getriebeeingangswelle und eine Reibkupplung zugeordnet sind. Im Zuge eines Anfahrvorganges wird von der ersten und der zweiten Reibkupplung wenigstens eine schlupfend betrieben. Um ein besonders zügiges Anfahren zu ermöglichen und damit eine große Fahrzeugbeschleunigung zu erreichen, wird vorgeschlagen, bei noch stehendem Kraftfahrzeug eine Antriebsdrehzahl des Verbrennungsmotors auf ein Ausgangs-DrehzahlNiveau zu bringen, welches zumindest in einem mittleren, vorzugsweise in einem oberen Bereich eines möglichen Drehzahlintervalls liegt. Danach wird der Verbrennungsmotor derart betrieben, dass die erste und die zweite Reibkupplung gemeinsam soweit eingerückt werden, dass der Verbrennungsmotor ein Antriebsmoment bereitstellt, nahe eines maximalen Antriebsmomentes. Das von der ersten Reibkupplung und der zweiten Reibkupplung übertragene Gesamtantriebsmoment liegt dabei nahe eines maximalen Antriebsmomentes.

Aus der EP 1 350 044 B1 ist ein Verfahren zur Schaltung eines Doppelkupplungsgetriebes bekannt. Es wird ein zugkraftunterbrechungsfreies Rückschalten zwischen einem Quellgang und einem Zielgang ermöglicht. Bei einer Zug-Rückschaltung liefert der Motor ein positives Moment an das Getriebe. Der Quellgang ist der ersten Getriebeeingangswelle und der Zielgang ist der zweiten Getriebeeingangswelle zugeordnet. Bei der Einleitung des Schaltvorganges ist in einer ersten Phase die zweite Reibkupplung vollständig geöffnet. In einer zweiten Phase wird das Kupplungsmoment der ersten Kupplung auf das in der ersten Phase gültige Moment des Motors abgesenkt. Das Antriebsmoment des Motors wird vergrößert und die zweite Kupplung wird leicht eingerückt, so dass nun das Motormoment größer als das Kupplungsmoment der ersten Kupplung ist, so dass Kupplungsschlupf auftritt und die Motordrehzahl ansteigt, so dass gegen Ende der zweiten Phase eine Drehzahl des Motors über der Synchrondrehzahl des Zielganges erreicht wird. Durch leichtes Einkuppeln der zweiten Kupplung wird die zweite Getriebeeingangswelle hoch beschleunigt, so dass sich deren Drehzahl der Synchrondrehzahl des Zielganges annähert. Am Ende der zweiten Phase wird der Zielgang eingelegt, wobei unter Mitwirkung von dem Zielgang zugeordneten Synchronisiervorrichtungen des Getriebes die zweite Getriebeeingangswelle die Synchrondrehzahl des Zielganges erreicht und es damit zum Einlegen des Zielganges kommt. In einer dritten Phase wird nach Erreichen der gewählten Motordrehzahl das Motormoment wieder auf das ursprüngliche Moment abgesenkt, um ein weiteres Ansteigen der Motordrehzahl zu verhindern. In einer vierten Phase wird durch ein Absenken des Motormomentes unter das Kupplungsmoment die Motordrehzahl auf die Drehzahl der zweiten Getriebeeingangswelle heruntergezogen. In der fünften Phase wird dann die zweite Kupplung vollständig geschlossen.

Aus der DE 103 08 689 A1 ist ein Verfahren zur Zugrückschaltung eines Doppelkupplungsgetriebes bekannt. Bei einer Zugrückschaltung liefert der Verbrennungsmotor ein beschleunigendes Moment, welches von dem Verbrennungsmotor zum Abtrieb übertragen wird. Folglich zieht der Verbrennungsmotor das Fahrzeug zum Beispiel bei einem Kick-Down. Das Doppelkupplungsgetriebe weist zwei Teilgetriebe mit jeweils einer Reibkupplung und einer Getriebeeingangswelle auf. Bei einer indirekten Schaltung von einem Quellgang in einen Zielgang, die beide dem gleichen Teilgetriebe zugeordnet sind, wird zunächst von dem Quellgang in einen Zwischengang geschaltet, der dem anderen Teilgetriebe zugeordnet ist. Dieser Zwischengang kann dann ein Moment auf einen Abtrieb übertragen, während in dem ersten Teilgetriebe vom Quellgang in den Zielgang geschaltet wird. Auf diese Weise wird die Schaltung komfortabel ohne Unterbrechung der Zugkraft durchgeführt. In einer ersten Phase wird die noch momentübertragende Kupplung des ersten Teilgetriebes geöffnet. Am Ende der ersten Phase wird geprüft, ob sich der Antriebsstrang im Schub- oder Zugbetrieb befindet. Eine zweite Phase kann vorsehen, dass bei schlupfender Kupplung der ersten Getriebeeingangswelle eine Schlupfreserve vorzugsweise durch ein Konstanthalten des Kupplungsmomentes und/oder durch geeignetes Erhöhen des Motormomentes in Abhängigkeit des Fahrerwunschmomentes aufgebaut wird, wobei die Motordrehzahl an eine Solldrehzahl angeglichen wird. Die Solldrehzahl kann beispielsweise im Zugbetrieb durch das Maximum der Quellgang-Drehzahl und der Zwischengang-Drehzahl zuzüglich der Schlupfreserve bestimmt werden. Im Rahmen der zweiten Phase wird, wenn das Motormoment nicht ausreicht, um die Solldrehzahl zu erreichen, zusätzlich das Kupplungsmoment der momentübertragenden Reibkupplung zum Beispiel der ersten Getriebeeingangswelle reduziert. In einer dritten Phase kann zum Überblenden das Kupplungsmoment des Quellganges beziehungsweise der ersten Getriebeeingangswelle mit einer vorbestimmten Rampenfunktion auf den Wert "null" reduziert werden. Dabei wird das Kupplungsmoment der Kupplung des Zwischenganges beziehungsweise der zweiten Getriebeeingangswelle auf die Schlupfgrenze erhöht. Im Rahmen einer vierten Phase kann vorgesehen sein, dass zum Gangwechsel der Quellgang herausgenommen und der Zielgang eingelegt wird. Zur Motorsynchronisierung kann im Rahmen einer fünften Phase vorgesehen sein, dass durch die Erhöhung oder Reduzierung des Motormomentes in Abhängigkeit des Fahrerwunschmomentes die Motordrehzahl mit der Solldrehzahl abgestimmt wird, wobei die Solldrehzahl im Zugbetrieb durch die Zielgang-Drehzahl und die Schlupfreserve bestimmt wird. Im Rahmen einer sechsten Phase kann vorgesehen sein, dass durch eine entsprechende Reduzierung des Motormomentes in Abhängigkeit des Fahrerwunschmomentes und/oder durch Schließen der Kupplung des Zielganges ein Schlupf-Haft-Übergang realisiert wird, um einen ruckfreien Übergang zu erreichen und die Schaltung zu beenden. Zu Beginn der Schaltung und zur Momentensteuerung an den Kupplungen der Getriebeeingangswellen wird ein Last- und Drehzahlabhängiges Auffüllmoment bestimmt und zur Drehzahlanpassung während der Schaltung verändert, so dass das Auffüllmoment an den Kupplungen während der Drehzahlanpassung variabel eingestellt werden kann. Beispielsweise kann das jeweilige Auffüllmoment so ausgelegt sein, so dass der Fahrer ein konstantes Abtriebsmoment während der Drehzahlanpassung wahrnimmt. Motoreingriffe können bei niedriger Last durchgeführt werden, um ein schnelles Hochdrehen des Motors zu ermöglichen. Durch das Öffnen der Kupplung zu Beginn der Rückschaltung kann bei ausreichender Last das relativ langsame Anfahren der Schlupfgrenze entfallen. Damit sollen Zugrückschaltungen spontan durchführbar sein. Die Drehzahlanpassung orientiert sich an der Zieldrehzahl des Zielganges. Auf diese Weise soll der Fahrer das Einkuppeln des Zwischenganges auf dem nicht aktiven Teilgetriebe nicht merken. Die Übersetzungsstufe des Zwischenganges kann dabei größer als die Übersetzungsstufe des Zielganges bei einer Zug-Rückschaltung sein. Alternativ kann bei der Zug-Rückschaltung die Übersetzungsstufe des Zwischenganges zwischen der Übersetzungsstufe des Anfangsganges beziehungsweise des Quellganges und des Zielganges liegen. Ferner ist denkbar, dass die Übersetzungsstufe des Zwischenganges kleiner ist als die Übersetzungsstufe des Anfangsganges. Bei einer Doppelrückschaltung kann bei Erreichen der Zieldrehzahl der Zielgang bereits eingelegt sein.

Ferner offenbart die US 2003/100984 A1 ein Automatikgetriebe, insbesondere ein Schaltsteuerungsverfahren, bei dem eine Anzahl von innerhalb eines vorbestimmten Zeitraums erzeugten Schaltsignalen erfasst wird und bestimmt wird, ob diese Anzahl größer oder gleich einer vorbestimmten Anzahl ist. Ist die Anzahl des Schaltsignals größer oder gleich dieser vorbestimmten Anzahl, wird die Schaltung gemäß einem vorhergehenden Schaltsignal durchgeführt, insbesondere um Schaltstöße zu verringern.

Die EP 2 023 021 A2 offenbart ein Schaltsteuerverfahren unter Verwendung eines Automatikgetriebes, wobei das Durchführen einer Bereitschaftssteuerung für eine nächste Gangposition durch Vorhersagen der nächsten Gangposition aufgrund diverser Fahrzeugdaten und das Betreiben einer vorbestimmten Synchronisation basierend auf dem Ergebnis der Vorhersage erfolgt.

Aus der DE 10 2006 057 728 A1 ist eine Steuerung von Gangänderungen in einem Automatikgetriebe eines Kraftfahrzeuges bekannt, wobei insbesondere eine Strategie zur Steuerung von Gangänderungen im Anschluss an ein Absichtsänderungsereignis realisiert wird. Die Steuerungsstrategie wendet ein Konzept des neutralen Leerlaufs während des Freigebens des Gaspedals und das Fahren im Leerlauf an, um eine Absichtsänderungsschaltung zu bewältigen.

Ferner ist aus der DE 100 46 598 A1 ein Schalt- bzw. ein Steuerverfahren für ein Automatikgetriebe bekannt, welches einen Schalt- bzw. einen Verschiebestoß verringert.

Schließlich offenbart die DE 10 2004 043 345 A1 ein Verfahren zur Erhöhung der Spontanität eines elektro-hydraulisch gesteuerten Automatikgetriebes, bei dem eine Schaltung ausgeführt wird, indem während eine erste Kupplung öffnet, eine zweite Kupplung schließt. Während einer Hochschaltung von einer ersten in eine zweite Übersetzungsstufe wird diese nicht vollständig beendet, es erfolgt ein Wechsel zu einer Rückschaltung in die erste Übersetzungsstufe, wenn ein Abbruchkriterium erkannt wird. Das Abbruchkriterium wird hierbei beispielsweise aus einer vom Fahrer vorgebbaren Rückschaltungsanforderung bestimmt.

Diese im Stand der Technik bekannten Verfahren sind noch nicht optimal ausgebildet. Je nach dem, ob eine direkte Rückschaltung oder eine indirekte Rückschaltung vorgenommen werden soll, werden unterschiedliche Schaltstrategien verwendet. Der Zielgang steht bei Einleitung der Rückschaltung bereits fest. Eine Änderung des Zielgangs während der Durchführung der Schaltung ist nicht möglich. Fährt beispielsweise das Kraftfahrzeug in der sechsten Gangstufe und tritt der Fahrer das Fahrpedal weiter durch so ändert sich der Zielgang von der sechsten Gangstufe in die fünfte, vierte oder dritte Gangstufe. Wenn nun eine direkte Rückschaltung aber schon begonnen wurde, so kann dies dazu führen, dass die Rückschaltungen sequentiell nacheinander durchgeführt werden, also über den fünften und den vierten Gang in den dritten Gang. Zugkraftunterbrechungsfreie Schaltungen, insbesondere Rückschaltungen zwischen einem Quellgang und einem Zielgang, die sich auf gleichen Teilgetrieben eines Doppelkupplungsgetriebes befinden, sind nur über einen Zwischengang möglich. Der Schaltablauf nach den bislang bekannten Verfahren ist nicht nur kompliziert und erfordert auch strategische Maßnahmen, sondern verlängert eine solche Schaltung auch entsprechende soweit, dass diese als unsportlich und/oder nicht komfortabel empfunden werden könnte. Insbesondere ist es möglich, dass insbesondere indirekte Schaltungen als langsam empfunden werden könnten.

Der Erfindung liegt daher die Aufgabe zugrunde, das eingangs genannte Verfahren zur Schaltung eines Doppelkupplungsgetriebes derart auszugestalten und weiterzubilden, so dass der Zeitaufwand zur Durchführung der Schaltung optimiert ist.

Diese der Erfindung zugrunde liegende Aufgabe wird nun durch die Merkmale des Patentanspruches 1 gelöst. Am Ende der ersten Phase wird der Zielgang überprüft und gegebenenfalls geändert. Während der ersten Phase wird mindestens eine Reibkupplung zur Synchronisation der Motordrehzahl mit der "provisorischen Zieldrehzahl" schlupfend betrieben. Es wird nun zunächst abgewartet, bis die Drehzahl des Motors sich bei einer Rückschaltung entsprechend erhöht. Beim Einleiten dieser ersten Phase ist zwar festgelegt, dass es sich beispielsweise um eine Rückschaltung handelt, der einzulegende Zielgang ist zwar "provisorisch" ausgewählt, jedoch noch nicht final festgelegt. Während dieser ersten Phase werden beide Kupplungen oder eine der beiden Kupplungen derart gesteuert und/oder geregelt, dass sich ein Motorsollgradient einstellt. Es kann dabei eine der Reibkupplungen gesteuert werden und die andere Reibkupplung geregelt werden oder auch beide Reibkupplungen können zur Regelung genutzt werden. Zum Ende der ersten Phase hat die Motordrehzahl sich der Synchrondrehzahl zumindest angenähert. Zu einem Zeitpunkt vor Erreichen der Synchrondrehzahl des provisorisch bei der Einleitung der erste Phase ausgewählten Zielgangs wird nun die Wahl dieses Zielgangs nochmals überprüft. Dieser Zeitpunkt hängt von dem Abstand der Motordrehzahl und der Synchrondrehzahl des Zielgangs ab. Wenn nun der Fahrer während der Durchführung der Schaltung in der ersten Phase das Fahrpedal weiter durchtritt, kann sich dabei auch der provisorisch ausgewählte Zielgang ändern. Beispielsweise kann auch eine als direkt begonnene Rückschaltung in eine indirekte Rückschaltung erweitert werden. Bei einer Schaltung wird erst kurz vor Erreichen der Zieldrehzahl die Entscheidung getroffen, die Schaltung in einer Gangstufe zu beenden oder den Zielgang nochmals zu wechseln. Die Steuerung und/oder Regelung der Reibkupplungen in der ersten Phase kann insbesondere unabhängig von dem ausgewählten Zielgang sein. Wenn der Zielgang geändert worden ist, wird die erste Phase verlängert, bis die Motordrehzahl sich der neuen Synchrondrehzahl angenähert hat. Es ist keine zielgangspezifische Schaltstrategie notwendig. Alle Schaltungen, egal ob direkt oder indirekt werden in der ersten Phase gleich schnell durchgeführt. Es gibt auch für sportliche Fahrzeuge keine Notwendigkeit auf zugkraftunterbrechende Schaltungen auszuweichen. Dieses Verfahren zur Schaltung eines Doppelkupplungsgetriebes erlaubt nicht nur schnellere Schaltungen, sondern ermöglicht auch kurzfristig vor Beendigung der Schaltung noch einen Wechsel des Zielgangs und macht damit eine Berücksichtigung des Fahrerwunsches in einer zuvor festgelegten Strategie überflüssig. Bei einer Rückschaltung werden während der Rückschaltung vorzugsweise beide Reibkupplungen in einer ersten Phase schlupfend betrieben und nicht vollständig geöffnet. Die in den Teilgetrieben eingelegten Gangstufen sind die zuletzt eingelegten Gangstufen, nämlich der Quellgang und ein beliebiger Gang auf der anderen, "freien" Getriebeeingangswelle des anderen Teilgetriebes. Vorzugsweise ist ein Hilfsgang jedoch die nächsthöhere Gangstufe des Quellganges. Dies hat zwei Vorteile. Wenn eine Hochschaltung ausgehend vom Quellgang eingeleitet wird, muss die nächst höhere Gangstufe nicht mehr eingelegt werden, da diese schon eingelegt ist. Die Hochschaltung kann dann schneller eingeleitet werden. Der zweite Vorteil des Einlegens der nächst höheren Gangstufe ist, dass das Anlegen der anderen Reibkupplung für die Rückschaltung sofort beginnen kann und nicht erst abgewartet werden muss, bis die Motordrehzahl die Synchrondrehzahl der anderen, freien Getriebeeingangswelle überschreitet. Ist auf der anderen, freien Getriebeeingangswelle bereits aber eine andere Gangstufe eingelegt, so bleibt diese vorzugsweise eingelegt. Wenn nun kurz vor Erreichen der Synchrondrehzahl des Zielganges entschieden wird, die Rückschaltung in diesem Gang auch zu beenden, so wird die zugehörige Reibkupplung des Zielgangs geöffnet und der Zielgang wird eingelegt. Hierbei wird diese Reibkupplung erfindungsgemäß in einer zweiten Phase nur bis zu einem niedrigen Restmoment, beispielsweise von einem Restmoment von weniger als 50 Nm geöffnet. Wenn die entsprechende Gangstufe, insbesondere der Quellgang ausgelegt ist, zieht die zugehörige Reibkupplung mit dem Restmoment die Getriebeeingangswelle hoch, wodurch die Synchronisationsphase verkürzt werden kann. In der zweiten Phase wird die dem Zielgang zugeordnete Reibkupplung geöffnet und in einer dritten Phase wird der Zielgang eingelegt wird und zum Ende der dritten Phase die dem Zielgang zugeordnete Reibkupplung geschlossen. Kurz bevor die Getriebeeingangswelle die Motordrehzahl erreicht, wird die Reibkupplung geöffnet (zweite Phase) und der entsprechende Zielgang kann eingelegt werden (dritte Phase). Hierbei wird die Reibkupplung nicht komplett geöffnet, sondern beispielsweise bis auf einen Restmoment von beispielsweise ungefähr 10 Nm zu öffnen. Nachdem der Zielgang eingelegt ist, kann die Kupplung geschlossen werden. Die zweite und dritte Phase, "Reibkupplung öffnen, Zielgang einlegen und Reibkupplung schließen" sind besonders schnell ausführbar, wenn das Restmoment der zugehörigen Reibkupplung zum Beschleunigen der zugehörigen Getriebeeingangswelle genutzt wird. Die eingangs genannten Nachteile sind daher vermieden und entsprechende Vorteile sind erzielt.

Es gibt nun eine Vielzahl von Möglichkeiten, das erfindungsgemäße Verfahren auszugestalten und weiterzubilden. Hierfür darf zunächst auf die dem Patentanspruch 1 nachgeordneten Patentansprüche verwiesen werden. Im Folgenden wird eine bevorzugte Ausgestaltung des Verfahrens anhand der Zeichnung und der dazugehörigen Beschreibung näher erläutert. In der Zeichnung zeigt:
- Fig. 1: in einem schematischen Diagramm die Drehzahl der beiden Getriebeeingangswellen und des Motors aufgetragen über die Zeit bei einer direkten Rückschaltung von der fünften Gangstufe in die vierte Gangstufe gemäß dem Stand der Technik,
- Fig. 2: in einem schematischen Diagramm das Drehmoment des Motors und das übertragende Drehmoment der beiden Reibkupplungen eines Doppelkupplungsgetriebes, aufgetragen über die Zeit während der direkten Rückschaltung von der fünften Gangstufe in die vierte Gangstufe gemäß Fig. 1,
- Fig. 3: in einem schematischen Diagramm die Drehzahl der beiden Getriebeeingangswellen und des Motors während einer indirekten Rückschaltung von der sechsten in die vierte Gangstufe gemäß dem Stand der Technik,
- Fig. 4: in einem schematischen Diagramm das Drehmoment des Motors und das von den beiden Reibkupplungen des Doppelkupplungsgetriebes übertragene Drehmoment aufgetragen über die Zeit während der indirekten Rückschaltung gemäß der Fig. 3,
- Fig. 5: in einem schematischen Diagramm die Drehzahl der beiden Getriebeeingangswellen und des Motors bei einer erfindungsgemäßen Rückschaltung von der fünften Gangstufe in die vierte Gangstufe aufgetragen über die Zeit,
- Fig. 6: in einem schematischen Diagramm, das Drehmoment des Motors und das übertragene Drehmoment der beiden Reibkupplungen K1 und K2 bei der direkten Rückschaltung gemäß der Fig. 5, aufgetragen über die Zeit,
- Fig. 7: in einem schematischen Diagramm, die Drehzahl des Motors und der beiden Getriebeeingangswellen bei einer erfindungsgemäßen, indirekten Rückschaltung von der sechsten in die vierte Gangstufe, aufgetragen über die Zeit, und
- Fig. 8: in einem schematischen Diagramm, das Drehmoment des Motors sowie das übertragene Drehmoment der beiden Reibkupplungen K1, K2 während einer indirekten Rückschaltung gemäß der Fig. 7 aufgetragen über die Zeit.

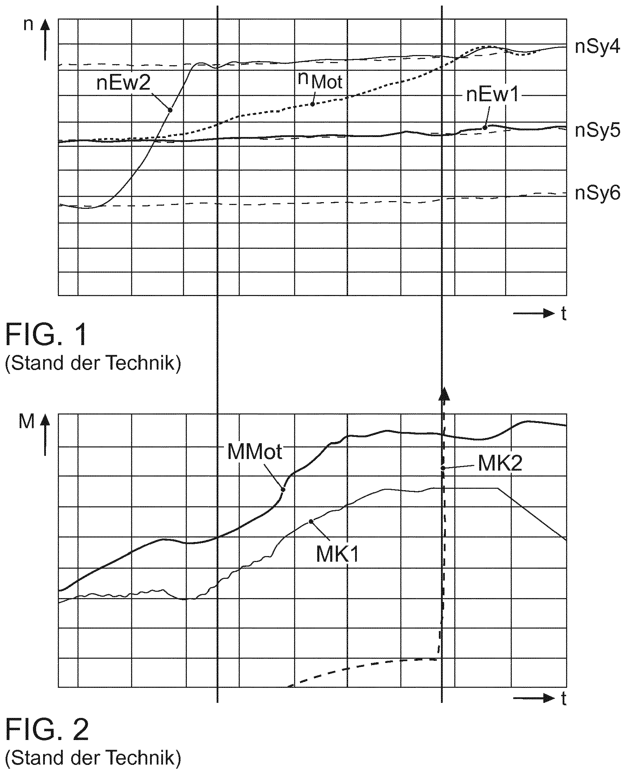

Zunächst darf beispielhaft der Schaltablauf einer direkten Rückschaltung von fünften Gangstufe in die vierte Gangstufe erläutert werden, wie es Stand der Technik ist, anhand von den Fig. 1 und 2:
Das Doppelkupplungsgetriebe weist zwei Teilgetriebe auf. Dem einen Teilgetriebe ist dabei eine Reibkupplung K1 und dem anderen Teilgetriebe ist eine Reibkupplung K2 zugeordnet. Das Drehmoment Mₘₒₜ eines nicht dargestellten Motors (Verbrennungsmotors) und das von den beiden Reibkupplungen K1 und K2 jeweils übertragene Drehmoment MK1 und MK2 ist in Fig. 2 gut zu erkennen. Das Drehmoment M_{Mot} des Verbrennungsmotors kann dabei über eine der Reibkupplungen K1, K2 und/oder über beide Reibkupplungen K1, K2 an jeweils eine Getriebeeingangswelle weitergeleitet werden. Die eine Getriebeeingangswelle (nicht dargestellt) ist dabei dem einen Teilgetriebe und die andere Getriebeeingangswelle (nicht dargestellt) ist dem anderen Teilgetriebe zugeordnet. Mit jedem Teilgetriebe sind mehrere Gangstufen realisierbar. Dem ersten Teilgetriebe mit der Reibkupplung K1 und der Getriebeeingangswelle Ew1 sind dabei vorzugsweise die ungeraden Gangstufen 1, 3 und 5 und dem anderen, zweiten Teilgetriebe sind die zweite Reibkupplung K2 und die zweite Getriebeeingangswelle Ew2 zugeordnet. Die erste Reibkupplung K1 wird nun zunächst nach Beginn des Schaltvorganges schlupfend betrieben, wodurch das Drehmoment MK1 unterhalb des Drehmomentes M_{Mot} des Verbrennungsmotors liegt. Die zweite Reibkupplung K2 ist geöffnet. Als Quellgang ist in der ersten Teilgetriebe die fünfte Gangstufe eingelegt, weswegen die Drehzahl nEw1 der ersten Getriebeeingangswelle Ew1 der Synchrondrehzahl nSy5 der fünften Gangstufe entspricht. Da zu Beginn des Schaltablaufes die Reibkupplung K1 geschlossen ist, entspricht auch die Drehzahl n_{Mot} des Verbrennungsmotors der Synchrondrehzahl nSy5 der fünften Gangstufe. Dadurch, dass die erste Reibkupplung K1 kurz nach Beginn des Schaltvorganges zunächst schlupfend betrieben wird, erhöht sich die Drehzahl n_{Mot} des Verbrennungsmotors im Laufe der Zeit in Richtung der Synchrondrehzahl der vierten Gangstufe nSy4. In dem dargestellten Beispiel ist auf der anderen, zweiten Getriebeeingangswelle (Drehzahl nEw2) zunächst die sechste Gangstufe eingelegt, weswegen die Getriebeeingangswelle Ew2 zunächst mit der Synchrondrehzahl nSy6 der sechsten Gangstufe umläuft. Während die zugeordnete Reibkupplung K2 geöffnet ist, wird die sechste Gangstufe ausgelegt und auf der zweiten Getriebeeingangswelle Ew2 wird die vierte Gangstufe eingelegt, wodurch die Drehzahl nEw2 der zweiten Getriebeeingangswelle Ew2 auf die Synchrondrehzahl nSy4 der vierten Gangstufe beschleunigt wird. Wenn die vierte Gangstufe auf der zweiten Getriebeeingangswelle Ew2 eingelegt ist, so kann die zweite Reibkupplung K2 zunächst leicht schlupfend betrieben und dann geschlossen werden. Wenn die Drehzahl des Verbrennungsmotors im wesentlichen der Synchrondrehzahl nSy4 der vierten Gangstufe entspricht, wird die zweite Reibkupplung K2 geschlossen und anschließend kann die erste Reibkupplung K1 wieder geöffnet werden.

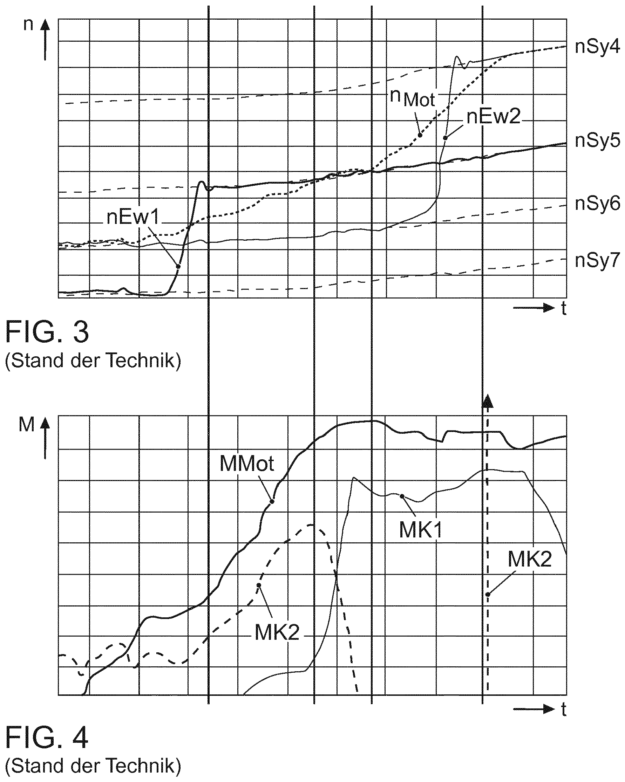

Im Folgenden darf nun eine indirekte Rückschaltung gemäß dem Stand der Technik beschrieben werden anhand der Fig. 3 und 4 von einer sechsten in eine vierte Gangstufe:
Quellgang ist hier die sechste Gangstufe und Zielgang ist die vierte Gangstufe. Zu Beginn des Verfahrens ist die zweite Reibkupplung K2 geschlossen und die sechste Gangstufe eingelegt, wobei die zweite Getriebeeingangswelle Ew2 mit der Synchrondrehzahl nSy6 der sechsten Gangstufe umläuft. Beispielhaft ist hier dargestellt, dass zu Beginn des Verfahrens auf der anderen Getriebeeingangswelle, nämlich der ersten Getriebeeingangswelle Ew1 die siebte Gangstufe eingelegt ist, so dass diese erste Getriebeeingangswelle Ew1 mit der Synchrondrehzahl nSy7 umläuft. Als Hilfsgang soll aber nicht die siebte Gangstufe, sondern die fünfte Gangstufe in Form des Zwischenganges verwendet werden, so dass bei geöffneter erster Reibkupplung K1 auf der ersten Getriebeeingangswelle Ew1 die siebte Gangstufe ausgelegt und die fünfte Gangstufe eingelegt wird, so dass die erste Getriebeeingangswelle Ew1 mit der Synchrondrehzahl nSy5 umläuft. Gleichzeitig oder danach wird die der zweiten Getriebeeingangswelle Ew2 zugeordnete Reibkupplung K2 leicht geöffnet und dabei schlupfend betrieben, so dass die Drehzahl N_{Mot} des Verbrennungsmotors zunächst bis zur Synchrondrehzahl nSy5 der fünften Gangstufe ansteigt. Wenn die Drehzahl N_{Mot} des Verbrennungsmotors diese Synchrondrehzahl nSy5 der fünften Gangstufe erreicht hat, erfolgt eine Momentenübergabe von der zweiten Reibkupplung K2 an die erste Reibkupplung K1, wonach die erste Reibkupplung K1 ebenfalls schlupfend betrieben wird, so dass die Drehzahl des Verbrennungsmotors weiter ansteigt in Richtung der Synchrondrehzahl nSy4 der vierten Gangstufe. Dadurch, dass bei der zweiten Getriebeeingangswelle Ew2 nun die Reibkupplung K2 geöffnet ist, kann der Zielgang, nämlich die vierte Gangstufe auf der zweiten Getriebeeingangswelle eingelegt werden, so dass die Drehzahl der zweiten Getriebeeingangswelle nEw2 auf die Synchrondrehzahl nSy4 der vierten Gangstufe ansteigt. Hat die Drehzahl N_{Mot} die Synchrondrehzahl der vierten Gangstufe nSy4 im wesentlichen erreicht, so wird die zweite Reibkupplung MK2 geschlossen und die erste Reibkupplung K1 kann nun wieder geöffnet werden.

Bei den in Fig. 1, 2, 3 und 4 vorgestellten Rückschaltungen ist der Zielgang bei Beginn des Schaltablaufs bereits unveränderbar festgelegt, wenn die Schaltung eingeleitet worden ist. Eine Änderung des Zielgangs während der Durchführung der Schaltung führt zu einer Verlängerung des Schaltablaufs.

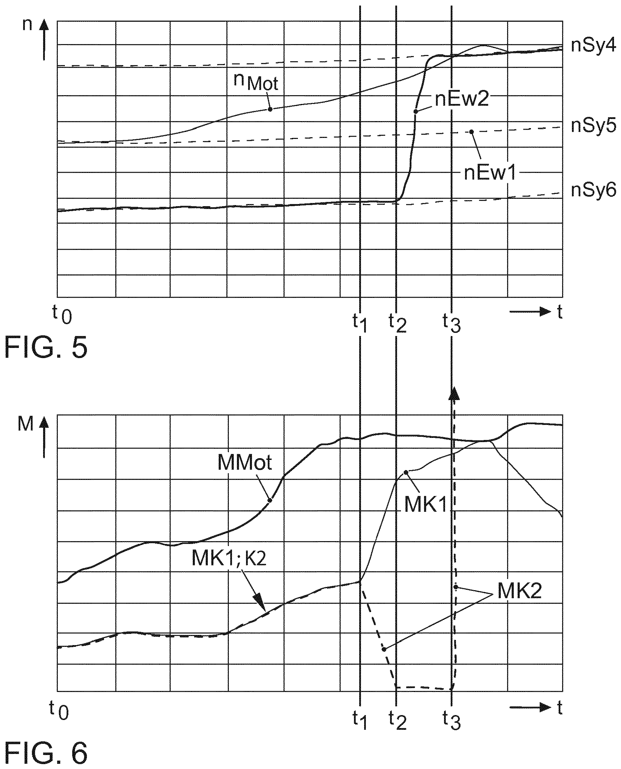

Im Folgenden darf das erfindungsgemäße Schaltungsverfahren anhand der Fig. 5 bis 8 näher erläutert werden:
In dem in den Fig. 5 und 6 dargestellten Ausführungsbeispiel ist das erfindungsgemäße Verfahren zur Schaltung eines Doppelkupplungsgetriebes am Beispiel einer direkten Rückschaltung von der fünften in die vierte Gangstufe dargestellt.

Das Doppelkupplungsgetriebe weist wiederum zwei Teilgetriebe (nicht dargestellt) auf, wobei einem ersten Teilgetriebe eine erste Reibkupplung K1 und eine erste Getriebeeingangswelle Ew1 zugeordnet sind. In dem ersten Teilgetriebe sind mehrere Gangstufen, insbesondere die erste, dritte, fünfte und eventuell eine siebte Gangstufe schaltbar. Eine Anwendung des Verfahrens auf Doppelkupplungsgetriebe mit mehr als sieben Gangstufen, beispielsweise auf Doppelkupplungsgetriebe mit acht, neun oder zehn Gangstufen, ist ohne weiteres möglich.

Dem zweiten Teilgetriebe sind eine zweite Reibkupplung K2 und eine zweite Getriebeeingangswelle Ew2 zugeordnet. Im zweiten Teilgetriebe sind die geraden Gangstufen, insbesondere die zweite, vierte und eine sechste Gangstufe zugeordnet.

Nachdem die Rückschaltung eingeleitet worden ist, werden in einer ersten Phase mindestens eine Reibkupplung, insbesondere beide Reibkupplungen K1, K2 schlupfend betrieben. Zu Beginn dieser ersten Phase, nämlich zum Zeitpunkt t0 ist die erste Reibkupplung K1 im wesentlichen geschlossen, so dass die Drehzahl des Verbrennungsmotors N_{Mot} der Synchrondrehzahl nSy5 der fünften Gangstufe entspricht. Durch Öffnen der ersten Reibkupplung K1 beziehungsweise durch das schlupfende Betreiben der Reibkupplung K1 wird nun die Drehzahl N_{Mot} des Verbrennungsmotors erhöht. Das summierte Moment MK1, MK2 der beiden Reibkupplungen K1, K2 wird dabei derart gewählt, dass sich ein, insbesondere bestimmter Motorsollgradient einstellt. Dabei kann eine Reibkupplung gesteuert werden und die andere Reibkupplung kann geregelt werden oder auch beide Reibkupplungen können zur Regelung genutzt werden. Zu einem Zeitpunkt t1 vor Erreichen der Synchrondrehzahl nSy4 des Zielganges, hier nämlich der vierten Gangstufe, wird festgelegt, dass die vierte Gangstufe eingelegt wird. Alternativ (nicht dargestellt) kann auch der Zielgang zu diesem Zeitpunkt t1 noch geändert werden, nämlich dass eine Rückschaltung beispielsweise in die dritte Gangstufe erforderlich ist, da sich in der ersten Phase zwischen den Zeitpunkten t0 und t1 die Stellung des Fahrpedals beispielsweise durch einen "Kick-Down" geändert hat. Dadurch, dass bis zum Zeitpunkt t1 gewartet wird, bis endgültig festgelegt wird, welcher Zielgang eingelegt wird, ist keine spezielle vorab festgelegte Schaltstrategie nötig, es muss insbesondere nicht unterschieden werden, ob es sich um eine direkte Schaltung vom einen Teilgetriebe in das andere Teilgetriebe oder um eine indirekte Schaltung handelt.

Zu Beginn der Schaltung, nämlich zum Zeitpunkt t0 ist an dem anderen, zweiten Teilgetriebe zunächst die nächst höhere Gangstufe, nämlich hier die sechste Gangstufe vorgewählt. Hierdurch entspricht in der ersten Phase zwischen dem Zeitpunkt t0 und t1 die Drehzahl der zweiten Getriebeeingangswelle nEw2 der Synchrondrehzahl nSy6 der sechsten Gangstufe. Nachdem zum Zeitpunkt t1 festgelegt worden ist, dass die vierte Gangstufe als Zielgang feststeht, so wird in einer anschließenden zweiten Phase, nämlich zwischen den Zeitpunkten t1 und t2 eine der Reibkupplungen, nämlich die dem Zielgang zugeordnete zweite Reibkupplung K2 geöffnet, wie es in Fig. 6 durch das fallende Drehmoment MK2 dargestellt ist. Wenn nun in einer dritten Phase zwischen den Zeitpunkten t2 und t3 der Zielgang auf der zweiten Getriebeeingangswelle EW2 eingelegt wird, so wird die Drehzahl der zweiten Getriebeeingangswelle nEW2 auf die Synchrondrehzahl nSy4 der vierten Gangstufe erhöht. Hierbei wird die Reibkupplung K2 in der zweiten und insbesondere in der dritten Phase nicht komplett geöffnet, so dass nachdem die sechste Gangstufe ausgelegt ist, ein Restmoment von beispielsweise weniger als 50 Nm auf die frei drehende zweite Getriebeeingangswelle über die Reibkupplung K2 übertragen wird, so dass diese beschleunigt wird. Das heißt, wenn die sechste Gangstufe ausgelegt ist, zieht die zweite Reibkupplung K2 mit dem Restmoment die zweite Getriebeeingangswelle Ew2 hoch, wodurch die Synchronisationsphase verkürzt werden kann. Kurz bevor die Drehzahl nEw2 der zweiten Getriebeeingangswelle Ew2 die Motordrehzahl N_{Mot} erreicht, wird die zweite Reibkupplung MK2 komplett geöffnet und die vierte Gangstufe, nämlich der Zielgang wird eingelegt. Hiernach wird in einer vierten Phase zum bzw. ab dem Zeitpunkt t3 die zweite Reibkupplung K2 wieder geschlossen und anschließend die erste Reibkupplung K1 geöffnet, so dass nun die vierte Gangstufe zur Übertragung des Drehmomentes an den Abtrieb genutzt wird.

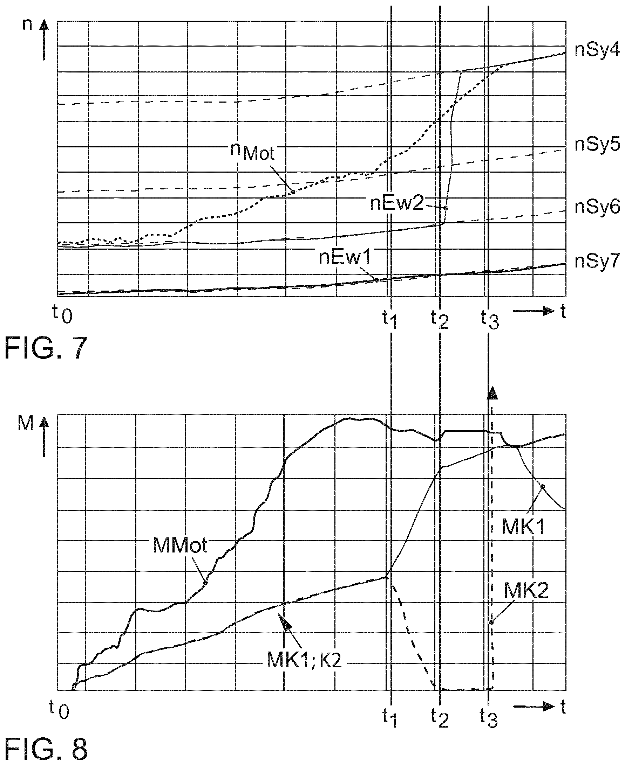

In den Fig. 7 und 8 ist nun der Schaltablauf für eine indirekte Schaltung des Doppelkupplungsgetriebes dargestellt. Quellgang ist hierbei die sechste Gangstufe und Zielgang ist die vierte Gangstufe. Es handelt sich hierbei insbesondere um eine Zugrückschaltung. Zu Beginn einer ersten Phase, nämlich zum Zeitpunkt t0 ist die sechste Gangstufe in dem zweiten Teilgetriebe eingelegt, das heißt, die zweite Getriebeeingangswelle Ew2 dreht sich mit der Drehzahl nEw2, nämlich mit der Synchrondrehzahl nSy6 der sechsten Gangstufe. In dem anderen Teilgetriebe ist auf der ersten Getriebeeingangswelle Ew1 die vorzugsweise nächst höhere Gangstufe, nämlich die siebte Gangstufe eingelegt, so dass die erste Getriebeeingangswelle Ew1 sich mit der Synchrondrehzahl nSy7 der siebten Gangstufe dreht. Dadurch, dass die nächst höhere Gangstufe, das heißt die nächst höhere über dem Quellgang liegende Gangstufe eingelegt ist, sind zwei Vorteile erzielt. Wenn statt einer Rückschaltung eine Hochschaltung erforderlich ist, so muss die nächst höhere Gangstufe nicht erst eingelegt werden, sondern die nächst höhere Gangstufe kann schneller erreicht werden. Der weitere Vorteil des Einlegens der höheren Gangstufe auf dem anderen Teilgetriebe ist, dass das Anlegen der zweiten Reibkupplung K2 für die Rückschaltung sofort beginnen kann und nicht erst abgewartet werden muss, bis die Motordrehzahl N_{Mot} die Synchrondrehzahl der "freien", anderen, hier ersten Getriebeeingangswelle Ew1 überschreitet. Wenn auf der anderen Getriebeeingangswelle bereits ein anderer Gang als die nächst höhere Gangstufe eingelegt ist, so bleibt dieser vorzugsweise eingelegt. In der ersten Phase (zwischen t0 und t1) während der Rückschaltung werden die beiden Reibkupplungen K1 und K2 derart angesteuert, dass sich ein, insbesondere bestimmter Motorsollgradient einstellt. Dabei kann eine Reibkupplung K1, K2 gesteuert werden und die andere Reibkupplung K2, K1 kann geregelt werden oder auch beide Reibkupplungen K1, K2 können zur Regelung benutzt werden.

Zum Zeitpunkt t1 vor Erreichen der Synchrondrehzahl nSy4 der vierten Gangstufe wird entschieden, die Rückschaltung auch in dieser Gangstufe zu beenden. Dazu wird die dem Zielgang zugeordnete zweite Reibkupplung in einer zweiten Phase, nämlich zwischen dem Zeitpunkt t1 und t2 geöffnet und auf der zweiten Getriebeeingangswelle Ew2 beziehungsweise im zweiten Teilgetriebe wird die sechste Gangstufe ausgelegt.

In einer dritten Phase zwischen den Zeitpunkten t2 und t3 wird der Zielgang, nämlich hier die vierte Gangstufe eingelegt, wodurch die Drehzahl nEw2 der zweiten Getriebeeingangswelle Ew2 auf die Synchrondrehzahl nSy4 beschleunigt wird. Auch hierbei kann das bereits anhand der Fig. 5 und Fig. 6 beschriebene bevorzugte Verfahren verwendet werden, nämlich dass die dem Zielgang zugeordnete Reibkupplung K2 bis auf ein Restmoment geöffnet wird, wobei nachdem auf dieser zugehörigen Getriebeeingangswelle Ew2 die entsprechende Gangstufe ausgelegt worden ist - hier nämlich die sechste Gangstufe ausgelegt worden ist -, wird die zweite Getriebeeingangswelle Ew2 durch das Restmoment zunächst bis kurz vor Erreichen der Motordrehzahl N_{Mot} hoch beschleunigt. Hierdurch kann die Synchronisationsphase verkürzt werden. Die entsprechende Synchronisiervorrichtung kann nun noch dazu verwendet werden, die zweite Getriebeeingangswelle EW2 auf die Synchrondrehzahl nSy4 des Zielgangs, nämlich der vierten Gangstufe zu bringen. In der dritten Phase zwischen den Zeitpunkten t2 und t3 wird dann der Zielgang eingelegt. Zum Zeitpunkt t3 wird nun die zugehörige zweite Reibkupplung K2 geschlossen und die andere, erste Reibkupplung K1 kann nun wieder geöffnet werden. Hiernach ist die Rückschaltung beendet.

Schaltungen nach dem Stand der Technik können im Zeitverhalten sehr unterschiedlich sein. Direkte Schaltungen sind zwar schnell durchführbar, indirekte Schaltungen fallen dagegen zeitlich ab. Das hier vorgestellte Verfahren ermöglicht es, Schaltungen zunächst in der ersten und zweiten Phase und auch in den weiteren Phasen im wesentlichen gleich durchzuführen, egal ob es sich dabei um eine direkte Schaltung oder eine indirekte Schaltung handelt. Auch zugkraftunterbrechungsfreie indirekte Schaltungen sind schnell durchführbar. Ein weiterer Vorteil dieses vorgestellten Verfahrens ist, dass wenn der Fahrer in der ersten Phase seine Meinung ändert und beispielsweise während der ersten Phase das Fahrpedal weiter durchtritt, sich der Zielgang auch noch bis zum Zeitpunkt t1 ändern kann.

Beispielsweise fährt das Kraftfahrzeug zunächst im sechsten Gang, der Fahrer tritt das Fahrpedal langsam durch. Der Zielgang wechselt nun von sechs über fünf nach vier nach drei. Der Schaltablauf hängt jetzt davon ab, wie schnell der Fahrer das Fahrpedal durchtritt. Wird die dritte Gangstufe als gewünschter und/oder optimaler Zielgang früh erreicht, dann wird zum Zeitpunkt t1 beziehungsweise vor dem Zeitpunkt t1 der Zielgang von der zunächst provisorisch vorgewählten fünften Gangstufe in die dritte Gangstufe geändert. Es kann zum Zeitpunkt t1 daher direkt die dritte Gangstufe eingelegt werden und die Schaltung schneller abgeschlossen werden.

Bei Schaltungsvorgängen wird daher erst kurz vor Erreichen der Zieldrehzahl, nämlich zum Zeitpunkt t1 die Entscheidung getroffen, die Schaltung in einem bestimmten Gang zu beenden. Änderungen des Zielganges, die vorher eintreten, ändern nicht den Schaltablauf bis zum Zeitpunkt t1. Es ist keine vorab festgelegte Schaltstrategie notwendig. Alle Schaltungen werden gleich schnell durchgeführt. Es gibt daher auch für sportliche Fahrzeuge keine Notwendigkeit, auf zugkraftunterbrechende Schaltungen auszuweichen.

### Bezugszeichenliste

- K1: Reibkupplung
- K2: Reibkupplung
- EW1: Getriebeeingangswelle
- EW2: Getriebeeingangswelle
- n: Drehzahl
- t: Zeit
- n_{Mot}: Drehzahl eines Verbrennungsmotors
- nEw1: Drehzahl erste Getriebeeingangswelle
- nEw2: Drehzahl zweite Getriebeeingangswelle
- nSy4: Synchrondrehzahl vierte Gangstufe
- nSy5: Synchrondrehzahl fünfte Gangstufe
- nSy6: Synchrondrehzahl sechste Gangstufe
- nSy7: Synchrondrehzahl siebte Gangstufe
- t0: Zeitpunkt
- t1: Zeitpunkt
- t2: Zeitpunkt
- t3: Zeitpunkt
- MMot: Drehmoment Motor
- MK1: übertragenes Drehmoment erste Reibkupplung
- MK2: übertragenes Drehmoment zweite Reibkupplung
- MK1,K2: übertragenes Drehmoment der ersten und zweiten Reibkupplung

## Patentansprüche

1. Verfahren zur Schaltung eines Doppelkupplungsgetriebes, wobei das Doppelkupplungsgetriebe zwei Teilgetriebe mit jeweils einer Reibkupplung (K1 , K2) und mit jeweils einer Getriebeeingangswelle (EW1 , EW2) aufweist, wobei den beiden Teilgetrieben mehrere Gangstufen zugeordnet sind, wobei eine Schaltung von einer eingelegten Gangstufe, nämlich von einem Quellgang zu einem Zielgang durchgeführt wird, wobei in einer ersten Phase mindestens eine Reibkupplung zur Synchronisation der Motordrehzahl mit einer Synchrondrehzahl des Zielgangs schlupfend betrieben wird,
**dadurch gekennzeichnet, dass**
am Ende der ersten Phase der Zielgang überprüft und gegebenenfalls geändert wird, und dass
in einer zweiten Phase die dem Zielgang zugeordnete Reibkupplung geöffnet wird und in einer dritten Phase der Zielgang eingelegt wird und zum Ende der dritten Phase die dem Zielgang zugeordnete Reibkupplung (K1, K2) geschlossen wird,
wobei
in der zweiten Phase die dem Zielgang zugeordnete Reibkupplung (K1, K2) bis auf ein Restmoment geöffnet wird und das Restmoment zur Synchronisation der zugehörigen Getriebeeingangswelle (Ew1, Ew2) in der dritten Phase genutzt wird.

2. Verfahren nach Anspruch 1,
**dadurch gekennzeichnet, dass**
die Schaltung als Rückschaltung, insbesondere als Zugrückschaltung ausgebildet ist.

3. Verfahren nach einem der vorstehenden Ansprüche,
**dadurch gekennzeichnet, dass**
zu Beginn der Schaltung in dem einen Teilgetriebe der Quellgang eingelegt ist und in dem anderen Teilgetriebe die nächst höhere, über dem jeweiligen Quellgang liegende jeweilige Gangstufe eingelegt ist oder wird.

4. Verfahren nach einem der vorstehenden Ansprüche,
**dadurch gekennzeichnet, dass**
in der ersten Phase beide Reibkupplungen (K1, K2) schlupfend betrieben werden.

## Claims

1. Method for shifting a dual clutch transmission, wherein the dual clutch transmission has two sub-transmissions, each having a friction clutch (K1, K2) and a transmission input shaft (EW1, EW2), wherein several gear steps are assigned to the two sub-transmissions, wherein a shift is carried out from an engaged gear step, viz., from a source gear to a target gear, wherein, in a first phase, at least one friction clutch for synchronizing the engine speed with a synchronous speed of the target gear is operated in a slipping manner,
**characterized in that**,
at the end of the first phase, the target gear is checked and possibly changed, and that
in a second phase, the friction clutch assigned to the target gear is opened, and, in a third phase, the target gear is engaged, and, at the end of the third phase, the friction clutch (K1, K2) assigned to the target gear is closed, wherein
in the second phase, the friction clutch (K1, K2) assigned to the target gear is opened up to a residual torque, and the residual torque is used to synchronize the associated transmission input shaft (Ew1, Ew2) in the third phase.

2. Method according to claim 1,
**characterized in that**
the shift is designed as a downshift - in particular, as a traction downshift.

3. Method according to one of the preceding claims,
**characterized in that**
at the start of the shift in one sub-transmission, the source gear is engaged, and, in the other sub-transmission, the next higher gear step located above the respective source gear is or will be engaged.

4. Method according to one of the preceding claims,
**characterized in that**,
in the first phase, both friction clutches (K1, K2) are operated in a slipping manner.

## Revendications

1. Procédé pour le changement des vitesses sur une boîte de vitesses à double embrayage, la boîte de vitesses à double embrayage comportant deux demi-boîtes présentant chacune un embrayage à friction (K1, K2) et chacune un arbre d'entrée de boîte de vitesses (EW1, EW2), plusieurs rapports de vitesses étant associés aux deux demi-boîtes, un changement d'un rapport de vitesses enclenché, à savoir d'une vitesse initiale à une vitesse cible, étant effectué, au moins un embrayage à friction fonctionnantà glissement, dans une première phase, pour la synchronisation de la vitesse de rotation du moteur avec une vitesse de rotation synchronisée de la vitesse cible,
**caractérisé en ce que**
à la fin de la première phase, la vitesse cible est contrôlée et éventuellement modifiée et que
dans une deuxième phase, l'embrayage à friction associé à la vitesse cible est ouvert et, dans une troisième phase, la vitesse cible est engagée et, à la fin de la troisième phase, l'embrayage à friction (K1, K2) associé à la vitesse cible est fermé,
dans la deuxième phase, l'embrayage à friction (K1, K2) associé à la vitesse cible étant ouvert jusqu'à un couple résiduel et le couple résiduel étant utilisé pour la synchronisation de l'arbre d'entrée de boîte de vitesse (Ew1, Ew2) correspondant dans la troisième phase.

2. Procédé selon la revendication 1,
**caractérisé en ce que**
le changement de vitesse est conçu comme une rétrogradation, en particulier comme une rétrogradation par traction.

3. Procédé selon l'une quelconque des revendications précédentes,
**caractérisé en ce que**
au début du changement de vitesse, dans ladite une demi-boîte la vitesse initiale est engagée et dans l'autre demi-boîte, le rapport de vitesses respectif se trouvant juste au-dessus de la vitesse initiale respective est ou sera engagé.

4. Procédé selon l'une quelconque des revendications précédentes,
**caractérisé en ce que**
dans la première phase, les deux embrayages à friction (K1, K2) sont actionnés à glissement.
